# EUROPÄISCHE PATENTANMELDUNG

(11) **EP 3 246 274 A1**
(43) Veröffentlichungstag der Anmeldung: **22.11.2017**
(21) Anmeldenummer: 16170639.5
(22) Anmeldetag: 20.05.2016
(51) Int. Cl.: B65G 39/00, B65G 43/08, B65G 47/53, B65G 17/24

(54) **FÖRDERABSCHNITT ZUM FÖRDERN VON SORTIERGUT IN UNTERSCHIEDLICHE RICHTUNGEN**

(71) Anmelder: Siemens Aktiengesellschaft, 80333 München (DE)
(72) Erfinder: ASCHPURWIS, Carsten, 78464 Konstanz (DE)
(74) Vertreter: Maier, Daniel Oliver

(57) **Zusammenfassung**

Diese Erfindung offenbart eine Vorrichtung (2) zum Fördern von Sortiergut (4) in unterschiedliche Richtungen, umfassend:
a) ein antreibbares Gliederband (6) zum Fördern des Sortierguts (4) in einer Hauptförderrichtung (8);
b) eine Anzahl von Rolleneinsätzen (14), die in das Gliederband (6) eingesetzt sind, wobei:
b1) ein Rolleneinsatz (14) über mindestens eine Rolle (18) verfügt, deren Drehachse (16) im Wesentlichen in der Ebene des Gliederbandes (6, 6a, 6b) und in einem Winkel (α) zur Hauptförderrichtung (8) angeordnet ist,
b2) die mindestens eine Rolle (18) über den Rollenumfang verteilt angeordnete Querrollen (22) umfasst, deren Drehachsen (24) im Wesentlichen senkrecht zur Drehachse (16) der mindestens einen Rolle (18) angeordnet sind;
b3) die mindestens eine Rolle (18) einen Durchmesser hat, der grösser als die Höhe des Gliederbandes (6) ist,

c) ein antreibbares Reibband (26), das unterhalb des Gliederbandes (6) verlaufend angeordnet ist und zumindest teilweise im Reibschluss mit den Rollen (18) des Rolleneinsatzes (14) steht; und
d) eine Steuereinheit (27) zum Antrieb des Gliederbandes (6) und des Reibbandes (26) mit den folgenden Eigenschaften vorgesehen ist:
d1) Antreiben von Gliederband (6) und Reibband (26) mit derselben Geschwindigkeit;
d2) Antreiben von Reibband (26) und Gliederband (6), wobei die Geschwindigkeit des Reibbandes (26) höher ist als die Geschwindigkeit des Gliederbandes (6), wobei der Geschwindigkeitsunterschied von Gliederband (6) und Reibband (26) zum Ablenken des Sortiergut (4) in einer ersten seitlichen Richtung in einem Winkel zur Hauptförderrichtung (8) führt; und
d3) Antreiben von Reibband (26) und Gliederband (6), wobei die Geschwindigkeit des Reibbandes (26) kleiner ist als die Geschwindigkeit des Gliederbandes (6), wobei der Geschwindigkeitsunterschied von Gliederband (6) und Reibband (26) zum Ablenken des Sortiergut (4) in einer zweiten seitlichen Richtung in einem Winkel zur Hauptförderrichtung (8) führt.

## Beschreibung

Die vorliegende Erfindung bezieht sich auf eine Vorrichtung zum Fördern von Sortiergut in unterschiedliche Richtungen.

Sortiergut, wie z.B. Päckchen, Pakete, feste Gebinde und Gepäckstücke werden in sogenannten Sortierzentren gesammelt und dort für die spätere Zustellung an den Adressaten sortiert. Hierzu sind in den Sortierzentren eine Vielzahl von Förderstrecken und Sortiereinrichtungen, wie z.B. Kippschalensorter und Querbandsorter, angeordnet, die zusammen mit der Prozesssteuerung das Sortiergut auf den durch die Adressierung bestimmten Sortierweg leiten.

Im Rahmen dieser Sortiervorgänge werden auch Förderbandabschnitte benötigt, auf denen das Sortiergut entweder geradeaus in einer Hauptförderrichtung oder in einer der beiden seitlichen Richtungen abgelenkt transportiert wird. Die hierzu bekannten Lösungen weisen in gewisser Weise immer drehbare Fördermittel auf, um die Förderung des Sortierguts in der gewünschten Richtung zu ermöglichen. Diese Art von Förderbandabschnitten weisen daher immer aktiv bewegte Teile, die gelenkig (drehbar) gelagert sein müssen, auf.

Der vorliegenden Erfindung liegt daher die Aufgabe zugrunde, eine Vorrichtung zum Fördern von Sortiergut in unterschiedliche Richtungen anzugeben, die möglichst ohne den Einsatz von drehbar gelagerten aktiv bewegten Teilen auskommt und somit kostengünstig und wartungsarm ist.

Diese Aufgabe wird gemäss der vorliegenden Erfindung durch eine Vorrichtung zum Fördern von Sortiergut in unterschiedliche Richtungen gelöst, wobei die Vorrichtung die folgenden Komponenten umfasst:
a) ein antreibbares Gliederband zum Fördern des Sortierguts in einer Hauptförderrichtung;
b) eine Anzahl von Rolleneinsätzen, die in das Gliederband eingesetzt sind, wobei:
   b1) ein Rolleneinsatz über mindestens eine Rolle verfügt, deren Drehachse im Wesentlichen in der Ebene des Gliederbandes und in einem Winkel zur Hauptförderrichtung angeordnet ist,
   b2) die mindestens eine Rolle über den Rollenumfang verteilt angeordnete Querrollen umfasst, deren Drehachsen im Wesentlichen senkrecht zur Drehachse der mindestens einen Rolle angeordnet sind;
   b3) die mindestens eine Rolle einen Durchmesser hat, der grösser als die Höhe des Gliederbandes ist,
c) ein antreibbares Reibband, das unterhalb des Gliederbandes verlaufend angeordnet ist und zumindest teilweise im Reibschluss mit den Rollen des Rolleneinsatzes steht; und
d) eine Steuereinheit zum Antrieb des Gliederbandes und des Reibbandes mit den folgenden Eigenschaften vorgesehen ist:
   d1) Antreiben von Gliederband und Reibband mit derselben Geschwindigkeit;
   d2) Antreiben von Reibband und Gliederband, wobei die Geschwindigkeit des Reibbandes höher ist als die Geschwindigkeit des Gliederbandes, wobei der Geschwindigkeitsunterschied von Gliederband und Reibband zum Ablenken des Sortierguts in einer ersten seitlichen Richtung in einem Winkel zur Hauptförderrichtung führt; und
   d3) Antreiben von Reibband und Gliederband, wobei die Geschwindigkeit des Reibbandes kleiner ist als die Geschwindigkeit des Gliederbandes, wobei der Geschwindigkeitsunterschied von Gliederband und Reibband zum Ablenken des Sortiergut in einer zweiten seitlichen Richtung in einem Winkel zur Hauptförderrichtung führt.

Auf diese Weise ist es möglich, das Sortiergut entweder geradeaus zu fördern oder in einer der beiden Richtungen seitlich zu fördern. Der Unterschied der Relativgeschwindigkeit von Gliederband und Reibband bewirkt so einen Antrieb der Rollen und damit die seitliche Ablenkung des auf den Rollen lagernden Sortierguts, während das Sortiergut auf dem Gliederband ebenfalls noch in Hauptförderrichtung weitergefördert wird. Je nach dem Geschwindigkeitsunterschied und der Grösse des von der Hauptförderrichtung abweichenden Winkels der Drehachse der Rollen erhält so der Vektor der Förderung eine Komponente senkrecht zur Hauptförderrichtung.

Um die Vorrichtung besonders kostengünstig und platzsparend ausführen zu können, ist es zweckmässig, wenn die mindestens eine Rolle des Rolleneinsatz und/oder die Querrollen auf ihrer jeweiligen Drehachse gleitgelagert ist bzw. sind. Somit sind die Rollen passiv antreibbar und erfordern keinerlei Schmierung oder sonst wie gelagerte aufwendige Wartung.

Ebenfalls zur Kostengünstigkeit und Einfachheit der Konstruktion kann es vorteilhaft sein, wenn der Rolleneinsatz mit seiner Drehachse in lochartige Aussparungen des Gliederbandes eingesteckt ist, und dort vorzugsweise eingerastet ist. Somit können beispielsweise beide Enden der Drehachse, die als einfacher Metallstift ausführbar ist, in entsprechende Halterungen eingeclipst werden, die an den Rändern der lochartigen Aussparungen angeformt sind. Damit sind sowohl die Rolleneinsätze wie auf die einzelnen Elemente des Gliederbandes als einfache Spritzgussteile kostengünstig herstellbar. Die Rollen und die Querrollen können ebenfalls als Spritzgussteile hergestellt werden, zum Beispiel Poly-Amid.

Da die Drehachse der Rollen in einem Winkel zu der Hauptförderrichtung (abweichend von einem rechten Winkel zur Hauptförderrichtung) angeordnet ist, treten bei einem Unterschied der Relativgeschwindigkeiten von Gliederband und Reibband an den Rollen, die dann angetrieben werden, aufgrund der nicht-orthogonalen Anordnung der Drehachse Scherkräfte auf. Diese Scherkräfte können besonders gut beherrscht werden, wenn die Drehachsen der Querrollen Sehnen des Rollenumfangs sind. Dabei können die Querrollen in zweckmässiger Weiterbildung der Erfindung als Tonnenrollen ausgeführt sein.

Zur Erzielung von gleichmässigen seitlichen Förderbewegungen für das Sortiergut ist es besonders vorteilhaft, wenn die die Rolleneinsätze regelmässig über das Gliederband verteilt angeordnet sind. So ist gewährleistet, dass auch das Sortiergut immer gleichmässig verteilt auf mehreren Rollen ruhend oder von mehreren Rollen seitlich angetrieben auf dem Gliederband gefördert wird. Typischerweise umfasst das Sortiergut für den hier vorgesehenen Anwendungsfall Päckchen und/oder Pakete und/oder feste Gebinde und/oder Gepäckstücke.

Vorteilhafte Ausgestaltungen der vorliegenden Erfindung werden nachfolgend detailliert mit Bezug auf die Zeichnung erläutert. Dabei zeigen:
- Figur 1: in schematischer Darstellung eine seitliche Ansicht eines Förderabschnitts mit einem Gliederband und einem darunterliegend angeordneten Reibband inkl. eines vergrösserten Ausschnitts;
- Figur 2: in schematischer Darstellung eine Aufsicht auf einen Ausschnitt aus dem Gliederband mit drei Rolleneinsätzen; und
- Figur 3: in schematischer Darstellung eine seitliche Ansicht einer in dem Rolleneinsatz verwendeten Rolle mit umlaufend angeordneten Tonnenrollen.

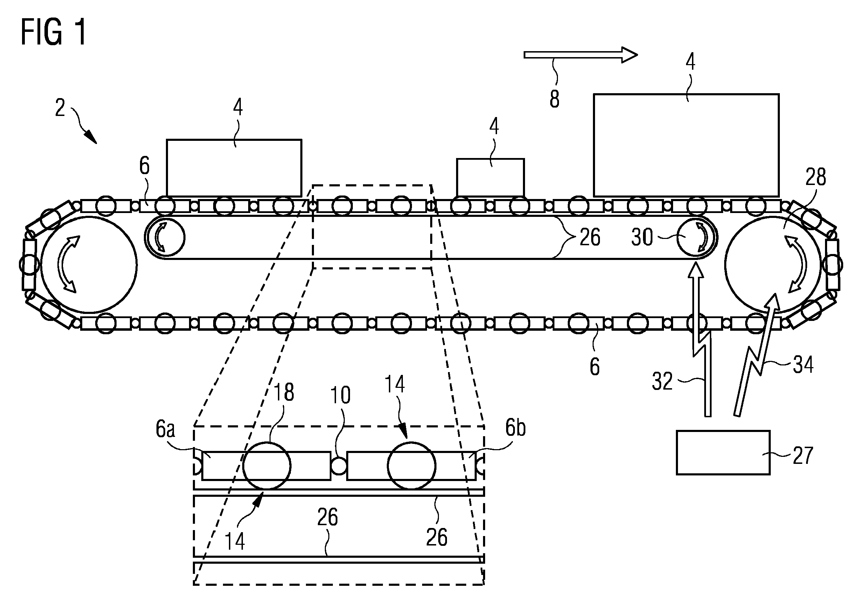

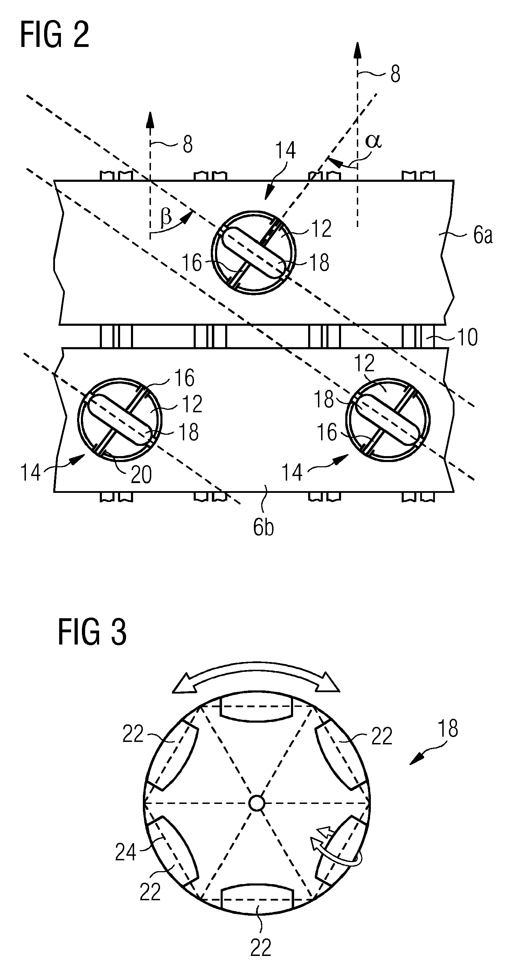

Die Figur 1 zeigt schematisch einen Förderabschnitt 2 für Stückgüter 4. Der Förderabschnitt 2 umfasst ein antreibbares Gliederband 6 zum Fördern des Sortierguts 4 in einer Hauptförderrichtung 8. Das Gliederband 6 umfasst dabei eine Anzahl von einzelnen Gliedern 6a, 6b (vgl. vergrösserter Ausschnitt), die durch angedeutete Gelenke 10 verbunden sind. Die einzelnen Glieder 6a, 6b haben eine im Wesentlichen quaderförmige Ausgestaltung. Beispielhafte Abmessungen können 1,50 Meter Breite, 0,10 Meter Länge und 0,02 Meter Höhe betragen. In den einzelnen Gliedern 6a, 6b sind lochartige runde Aussparungen 12 (vgl. Figur 2) vorgesehen, in die Rolleneinsätze 14 eingesetzt sind.

Jeder Rolleneinsatz 14 verfügt über eine auf einem Metallstift 16 (Drehachse) gelagerte Rolle 18. Dieser Metallstift 16 wird in entsprechenden Halterungen 20, die am Rand der Aussparungen 12 angeformt sind, eingeclipst und ist so im Wesentlichen in der Ebene des Gliederbandes (d.h. der Glieder 6a, 6b) und in einem Winkel α zur Hauptförderrichtung 8 angeordnet ist, wodurch sich für die Abrollrichtung der Rollen 18 ein Winkel β = 90°- α zur Hauptförderrichtung 8 ergibt. Weiter weist jede Rolle 18 über den Rollenumfang verteilt angeordnete Querrollen 22 auf, deren Drehachsen 24 im Wesentlichen senkrecht zur Drehachse 16 der mindestens einen Rolle 18 angeordnet sind. Die als Tonnenrollen ausgestalteten Querrollen 22 sind aus Gründen der Übersichtlichkeit nur in der Figur 3, die schematisch eine seitliche Ansicht der Rolle 18 darstellt, eingezeichnet worden. In dem vergrösserten Ausschnitt der Figur 1 ist schematisch erkennbar, dass die Rollen 18 einen Durchmesser haben, der grösser als die Höhe des Gliederbandes 6 ist. Damit wird das Sortiergut 4 auf den Rollen 18 ruhend in Förderrichtung 8 und die nachfolgend noch zu erläuterten Ablenkrichtungen transportiert.

Unterhalb des in der zeichnerischen Darstellung oberen Teils des Gliederbandes 6 (der Teil mit dem aufliegenden Sortiergut 4) ist ein weiteres Förderband 26 angeordnet, das über einen Teil seiner Länge in einem Reibkontakt mit den Rollen 18 steht und daher nachfolgend als Reibband 26 bezeichnet wird.

Weiter ist eine Steuereinheit 27 zum Antreiben des Gliederbandes 6 und des Reibbandes 26 vorgesehen. Der Steuereinheit 27 zugeordnet sind - hier im Detail nicht weiter dargestellt - Module zur Erkennung der Adressinformation des Sortierguts 4 (wie z.B. Barcode-Leser, Video-Kameras und dergleichen) und Sensoren zur Erfassung der Geschwindigkeit des Gliederbandes 6 und des Reibbandes 26. Die Steuereinheit 27 gibt Daten (hier angedeutet durch blitzartige Pfeile 32, 34) an die Antriebsmotoren 28, 30 zum Antreiben des Gliederbandes 6 und des Reibbandes 26 aus. Die Steuerung der Antriebsmotoren 28, 30 ist dabei mit drei Grundtypen der Geschwindigkeitseinstellung vorgesehen:

Grundtyp 1: Hier werden das Gliederband 6 und das Reibband 26 so angetrieben, dass sie mit derselben Geschwindigkeit laufen. Der Unterschied der Relativgeschwindigkeit hat daher den Wert NULL. Bei diesem Grundtyp stehen die Rollen 18 still, weil ein von NULL abweichender Unterschied der Relativgeschwindigkeit absichtlich vermieden wird. Im Ergebnis folgt das Sortiergut 4 recht exakt der Hauptförderrichtung 8.

Grundtyp 2: Hier werden das Reibband 26 und das Gliederband 6 so angetrieben, dass die Geschwindigkeit des Reibbandes 26 höher ist als die Geschwindigkeit des Gliederbandes 6. Hier kommt es nun aufgrund der von NULL verschiedenen Relativgeschwindigkeit der beiden Bänder 6, 26 zueinander zu einem Antreiben der Rollen 18, wodurch dieser Geschwindigkeitsunterschied von Gliederband 6 und Reibband 26 in der zeichnerischen Darstellung der Figur 2 zum Ablenken des Sortiergut 4 zur rechten Seite hin führt. Damit wird es beispielsweise möglich, bestimmtes gemäss der Adressinformation identifizierbares Sortiergut 4 aus dem Förderstrom auszuschleusen und an weitere hier nicht weiter dargestellte Sortiervorrichtungen zu übergeben, wie z.B. eine Einschussstelle für einen nachgeordneten Querbandsorter.

Grundtyp 3: Hier werden das Reibband 26 und das Gliederband 6 nun im Gegensatz zum Grundtyp 2 so angetrieben, dass die Geschwindigkeit des Reibbandes 26 kleiner ist als die Geschwindigkeit des Gliederbandes 6. Auch hier kommt es nun aufgrund der von NULL verschiedenen Relativgeschwindigkeit der beiden Bänder 6, 26 zueinander zu einem Antreiben der Rollen 18 in zum Grundtyp 2 umgekehrter Richtung, wodurch dieser Geschwindigkeitsunterschied von Gliederband 6 und Reibband 26 in der zeichnerischen Darstellung der Figur 2 zum Ablenken des Sortierguts 4 zur linken Seite hin führt. Damit wird es auch hier beispielsweise möglich, bestimmtes gemäss der Adressinformation identifizierbares Sortiergut 4 aus dem Förderstrom auszuschleusen und an weitere hier nicht weiter dargestellte Sortiervorrichtungen zu übergeben.

Durch die Einstellung der gewünschten Relativgeschwindigkeit der beiden Bänder 6, 26 zueinander kann zudem auch die Geschwindigkeit der seitlichen Förderbewegung, die nur bei den Grundtypen 2 und 3 auftritt, in relativ weiten Grenzen eingestellt werden. Da die Rollen 18 über die umlaufend angeordneten Tonnenrollen 22 verfügen, treten auch nur vernachlässigbare Scherkräfte auf, die durch das Abrollen der Tonnenrollen 22 weitgehend eliminierbar sind. Viele Bauteile des Gliederbandes 6 und der Rolleneinsätze 14 können als Kunststoffspritzteile ausgeführt sein. Bei der Lagerung der Rollen 18 und der Tonnenrollen 22 auf entsprechenden Metallstiften ergibt sich zudem eine weitgehend wartungsfreie Gleitlagerung der Rollen 18 und Tonnenrollen 22.

## Patentansprüche

1. Vorrichtung (2) zum Fördern von Sortiergut (4) in unterschiedliche Richtungen, umfassend:
a) ein antreibbares Gliederband (6) zum Fördern des Sortierguts (4) in einer Hauptförderrichtung (8);
b) eine Anzahl von Rolleneinsätzen (14), die in das Gliederband (6) eingesetzt sind, wobei:
b1) ein Rolleneinsatz (14) über mindestens eine Rolle (18) verfügt, deren Drehachse (16) im Wesentlichen in der Ebene des Gliederbandes (6, 6a, 6b) und in einem Winkel (α) zur Hauptförderrichtung (8) angeordnet ist,
b2) die mindestens eine Rolle (18) über den Rollenumfang verteilt angeordnete Querrollen (22) umfasst, deren Drehachsen (24) im Wesentlichen senkrecht zur Drehachse (16) der mindestens einen Rolle (18) angeordnet sind;
b3) die mindestens eine Rolle (18) einen Durchmesser hat, der grösser als die Höhe des Gliederbandes (6) ist,
c) ein antreibbares Reibband (26), das unterhalb des Gliederbandes (6) verlaufend angeordnet ist und zumindest teilweise im Reibschluss mit den Rollen (18) des Rolleneinsatzes (14) steht; und
d) eine Steuereinheit (27) zum Antrieb des Gliederbandes (6) und des Reibbandes (26) mit den folgenden Eigenschaften vorgesehen ist:
d1) Antreiben von Gliederband (6) und Reibband (26) mit derselben Geschwindigkeit;
d2) Antreiben von Reibband (26) und Gliederband (6), wobei die Geschwindigkeit des Reibbandes (26) höher ist als die Geschwindigkeit des Gliederbandes (6), wobei der Geschwindigkeitsunterschied von Gliederband (6) und Reibband (26) zum Ablenken des Sortiergut (4) in einer ersten seitlichen Richtung in einem Winkel zur Hauptförderrichtung (8) führt; und
d3) Antreiben von Reibband (26) und Gliederband (6), wobei die Geschwindigkeit des Reibbandes (26) kleiner ist als die Geschwindigkeit des Gliederbandes (6), wobei der Geschwindigkeitsunterschied von Gliederband (6) und Reibband (26) zum Ablenken des Sortiergut (4) in einer zweiten seitlichen Richtung in einem Winkel zur Hauptförderrichtung (8) führt.

2. Vorrichtung nach Anspruch 1,
**dadurch gekennzeichnet, dass**
die mindestens eine Rolle (18) des Rolleneinsatz (14) und/oder die Querrollen (22) auf ihrer jeweiligen Drehachse (16 bzw. 24) gleitgelagert ist bzw. sind.

3. Vorrichtung nach Anspruch 1 oder 2,
**dadurch gekennzeichnet, dass**
der Rolleneinsatz (14) mit seiner Drehachse (16) in lochartige Aussparungen (12) des Gliederbandes (6) eingesteckt ist und dort vorzugsweise eingerastet ist.

4. Vorrichtung nach einem der Ansprüche 1 bis 3,
**dadurch gekennzeichnet, dass**
die Drehachsen (24) der Querrollen (22) Sehnen des Rollenumfangs sind.

5. Vorrichtung nach einem der Ansprüche 1 bis 4,
**dadurch gekennzeichnet, dass**
die Querrollen (22) als Tonnenrollen ausgeführt sind.

6. Vorrichtung nach einem der Ansprüche 1 bis 5,
**dadurch gekennzeichnet, dass**
die Rolleneinsätze (14) regelmässig über das Gliederband (6) verteilt angeordnet sind.

7. Vorrichtung nach einem der Ansprüche 1 bis 6,
**dadurch gekennzeichnet, dass**
das Sortiergut (4) Päckchen und/oder Pakete und/oder feste Gebinde und/oder Gepäckstücke umfasst.
